# FASCICULE DE BREVET EUROPEEN

(11) **EP 0 612 005 B1**
(45) Date de publication et mention de la délivrance du brevet: **25.09.1996**
(21) Numéro de dépôt: 94400341.7
(22) Date de dépôt: 16.02.1994
(51) Int. Cl.: G05D 16/06

(54) **Réducteur de pression de fluide à canule et étrier**
Fluiddruckminderer mit Kanüle und Sattel
Fluidpressure reducer with cannula calliper

(30) Priorité: 17.02.1993 FR 9301805
(43) Date de publication de la demande: 24.08.1994
(73) Titulaire: COMAP société anonyme, F-69008 Lyon (FR)
(72) Inventeur: Prevost, Alain, F-45150 Jargeau (FR)
(74) Mandataire: Maureau, Philippe

(56) Documents cités:
- FR-A- 1 563 224
- FR-A- 2 123 847
- FR-A- 2 410 194
- FR-A- 2 603 970
- US-A- 2 880 753

## Description

L'invention concerne les réducteurs de pression destinés à être utilisés dans les circuits de fluide en vue de maintenir, alors que leur entrée est soumise à une pression quelconque comprise dans une certaine gamme, une pression inférieure et sensiblement constante, à leur sortie.

Tandis que pour les conduites de grandes dimensions (de l'ordre de plusieurs centimètres de diamètre), on sait réaliser des réducteurs de pression simples et robustes, notamment à canule monobloc et étrier, pour les dimensions inférieures, le problème reste posé.

En effet, les configurations à canule et étrier connues sont mal adaptées aux applications de petites dimensions pour une raison précisément d'encombrement de leurs composants et à cause des difficultés de montage qu'elles soulèvent. C'est pourquoi on utilise généralement pour ces applications, des réducteurs à piston ou à membrane équilibrés par un ressort ; cependant ces réducteurs sont relativement complexes et sensibles à l'entartrage et au gommage des parties mobiles, les conceptions à piston nécessitant de nombreux joints qui ont tendance à coller, et ainsi relativement peu fiables.

L'invention a pour but de remédier à ces inconvénients et concerne à cet effet un réducteur de pression de fluide à canule et étrier du type comprenant un corps présentant un alésage traversant comportant une région d'entrée et une région de sortie de fluide, à l'intérieur duquel s'étend la canule, laquelle est munie d'un siège pour un clapet, réducteur de pression caractérisé en ce que la canule, rapportée dans l'alésage, y est étanchée du côté de la région d'entrée de fluide par un joint, le maintien en position étant assuré par un organe de blocage, et y est retenue en contre-pression et positionnée en orientation angulaire autour de l'axe longitudinal de l'alésage traversant par un organe d'encliquetage logé dans une cavité du corps, du côté de la région de sortie de fluide de celui-ci.

Un tel réducteur de pression apporte aux applications de petites dimensions, les qualités connues des réducteurs de pression à canule et étrier conventionnels utilisés dans les applications de grandes dimensions.

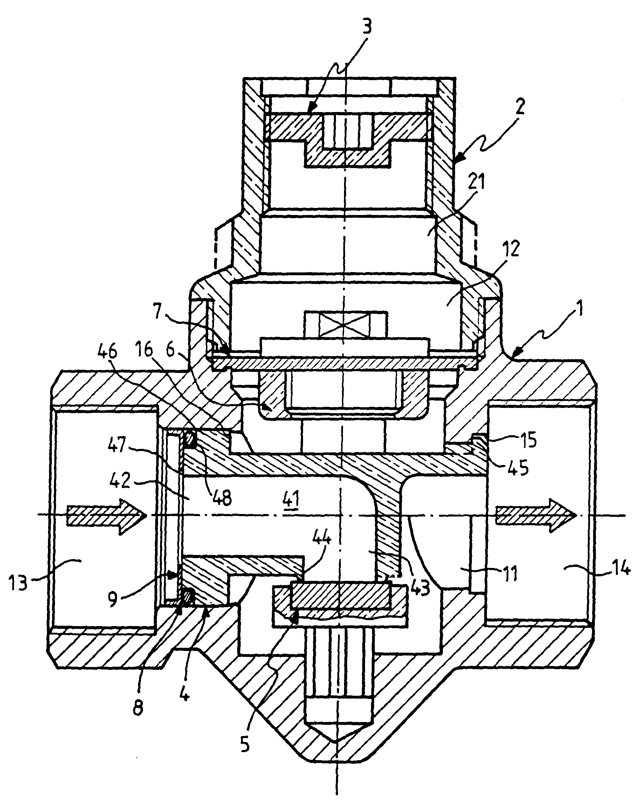

D'autres caractéristiques et avantages de l'invention ressortiront de la description qui va suivre d'une forme de réalisation de cette invention donnée à titre d'exemple non limitatif et représentée sur le dessin ci-joint montrant en coupe longitudinale un tel réducteur.

Le réducteur montré sur la figure comporte de manière connue un corps 1 présentant deux alésages 11, 12 perpendiculaires dont l'un le traverse de bout en bout et l'autre est borgne, débouchant l'un dans l'autre approximativement dans la partie centrale de l'alésage traversant 11 et à proximité de l'extrémité obturée de l'alésage borgne 12. L'alésage traversant 11 débouche à l'extérieur respectivement par une région d'entrée 13 de fluide (haute pression) et une région de sortie 14 de fluide (basse pression), le réducteur étant du type à entrée et sortie axiales en ligne. Ce réducteur comporte aussi un chapeau 2 également alésé de bout en bout, vissé dans la partie débouchant à l'extérieur, de l'alésage borgne 12 ; l'axe longitudinal de l'alésage 21 du chapeau est dans le prolongement de celui de l'alésage borgne 12 ; l'alésage 21 du chapeau 2 est fermé à l'opposé de la partie du chapeau qui est vissée dans le corps 1, par un bouchon 3 lui-même vissé dans cet alésage comme on le verra par la suite.

Toujours de manière connue, la partie centrale de l'alésage traversant 11 du corps 1 du réducteur comporte intérieurement une canule 4 munie d'un conduit 41 coudé à angle droit, dont une partie d'entrée 42 débouche dans la région d'entrée 13 de l'alésage traversant du corps 1 et est coaxiale à cet alésage traversant 11, et dont une partie de sortie 43 est coaxiale à l'alésage borgne 12 et débouche dans la région de cet alésage borgne du corps 1, qui elle-même ne débouche pas à l'extérieur (chambre aval), par un orifice circulaire de sortie dont le pourtour constitue un siège 44 pour un clapet 5 logé dans cette région de l'alésage borgne 12 (clapet aval). La paroi de la canule isole la région d'entrée 13 de l'alésage traversant, de sa région 14 de sortie et de l'alésage borgne 12 qui sont en communication permanente, sauf par son orifice de sortie lorsque celui-ci n'est pas obturé par le clapet 5 ; ce clapet est actionné vers l'ouverture ou la fermeture en fonction d'une part des pressions sur ses faces et d'autre part d'une force de rappel qui est créée et lui est transmise par un dispositif à membrane approprié. Ce dispositif comprend un étrier 6 auquel est solidarisé le clapet et entourant partiellement la canule 4, la membrane flexible 7 à laquelle est liée l'étrier et dont la périphérie est maintenue contre une surface de butée de la partie débouchant à l'extérieur de l'alésage borgne 12 du corps, par l'extrémité vissée dans le corps 1 du chapeau 2, et un ressort hélicoïdal de rappel (non représenté) dont la force de rappel, s'exerçant directement ou non sur la membrane 7, peut être réglée en vissant plus ou moins le bouchon 3 du chapeau. Le fait que la périphérie de la membrane 7 soit coincée entre une surface de l'alésage borgne 12 et l'extrémité du chapeau 2 permet une dépose aisée de cette membrane et ainsi les interventions à l'intérieur du corps 1 sans avoir à désolidariser celui-ci des conduites auxquelles il est vissé.

Selon l'invention, la canule 4, rapportée en étant montée à force dans l'alésage traversant 11, y est étanchée au moyen d'un joint torique 8 avec maintien en position par une bague sertie 9, et y est retenue en contre-pression et positionnée par un ergot d'encliquetage 45 en une seule pièce avec elle ou rapporté.

Plus précisément, la paroi de la canule 4 présente extérieurement, autour de la partie d'entrée 42 du conduit 41, une section droite (par un plan perpendiculaire à l'axe longitudinal de l'alésage transversal 11 du corps) de forme générale circulaire, tandis qu'elle n'est que de forme générale sensiblement demi-circulaire à l'opposé de la partie d'entrée 42 et du siège 44, de telle sorte que la partie ne débouchant pas à l'extérieur de l'alésage borgne 12 soit toujours en communication avec la région de sortie 14 de l'alésage traversant, mais que la canule porte à ses deux extrémités contre la paroi interne du corps, ce qui lui évite tout porte-à-faux.

L'ergot d'encliquetage 45 est en proéminence par rapport à la paroi extérieure de forme générale demi-circulaire de la canule, à l'extrémité de celle-ci qui est du côté de la sortie de fluide du corps, et logé dans une cavité 15 du corps disposée de telle sorte que le siège 44 reste alors positionné orthogonalement par rapport à l'axe de commande du clapet 5 (qui n'est autre que l'axe longitudinal de l'alésage borgne 12 du corps), la canule 4 étant empêchée de tourner autour de l'axe longitudinal de l'alésage traversant 11 ; la canule 4 est bloquée à l'encontre de tout mouvement en direction de la sortie de fluide du corps 1, par le fait qu'elle comporte, du côté de l'entrée de fluide, une collerette 46 en butée contre un épaulement 16 crée dans l'alésage traversant 11 ; une immobilisation ferme est procurée par la bague 9 sertie à l'intérieur de l'alésage traversant 11 et en appui contre la face d'extrémité 47 de la canule 4 tournée vers l'entrée de fluide ; afin de loger le joint torique 8, la collerette 46 comporte un épaulement 48 à proximité de cette face d'extrémité 47, et le joint 8 est ainsi comprimé et écrasé entre les parois de cet épaulement 48 et la bague sertie 9, ce qui le repousse également contre la paroi de l'alésage traversant 11 du corps, et étanche l'alésage borgne 12 et la région de sortie de l'alésage traversant par rapport à sa région d'entrée.

Comme cela est connu, l'ensemble clapet-membrane-ressort étant soumis aux forces résultant des pressions s'exerçant sur les faces du clapet, à la force résultant de la pression aval s'exerçant sous la membrane, et à la force du ressort, toute augmentation de la pression aval tend à fermer le clapet et ainsi à augmenter les pertes de charge à ce niveau, ce qui réduit finalement la pression aval ; une diminution de la pression agit naturellement en sens inverse.

Cependant, cette construction est considérablement plus simple et plus fiable que celle des réducteurs de pression de dimensions comparables, et de plus, comme on l'a vu, sa sensibilité à l'entartrage et au gommage est bien moindre.

## Revendications

1. Réducteur de pression de fluide à canule et étrier du type comprenant un corps (1) présentant un alésage traversant (11) comportant une région d'entrée (13) et une région de sortie (14) de fluide, à l'intérieur duquel s'étend la canule (4), laquelle est munie d'un siège (44) pour un clapet (1), réducteur de pression caractérisé en ce que la canule (4), rapportée dans l'alésage (11), y est étanchée du côté de la région d'entrée (13) de fluide par un joint (8), le maintien en position étant assuré par un organe de blocage (9), et y est retenue en contre-pression et positionnée en orientation angulaire autour de l'axe longitudinal de l'alésage traversant (11) par un organe d'encliquetage (45) logé dans une cavité du corps, du côté de la région de sortie de fluide de celui-ci.

2. Réducteur de pression de fluide selon la revendication 1 , caractérisé en ce que la canule (4) comporte, du côté de la région d'entrée (13) de fluide, un épaulement (48) dans lequel est logé le joint d'étanchéité (8).

3. Réducteur de pression de fluide selon la revendication 1, caractérisé en ce que l'organe de blocage (9) est une rondelle sertie dans l'alésage traversant (11) et en contact avec le joint (8) pour le déformer.

4. Réducteur de pression de fluide selon la revendication 1, caractérisé en ce que l'organe d'encliquetage (45) est un ergot en une seule pièce avec la canule (4).

5. Réducteur de pression de fluide selon la revendication 1, caractérisé en ce que l'organe d'encliquetage (45) est un ergot réalisé dans une pièce solidarisée à la canule (4).

6. Réducteur de pression selon la revendication 1, caractérisé en ce que la canule (4) comporte une collerette (46) en butée contre un épaulement (16) de l'alésage traversant (11).

## Patentansprüche

1. Fluiddruckminderer mit einer Kanüle und einem Sattel, der ein Gehäuse (1) mit einer Durchgangsbohrung (11) beinhaltet, die einen Eingangsbereich (13) und einen Ausgangsbereich (14) aufweist und in deren Inneren sich die Kanüle (4) erstreckt, die mit einem Sitz (44) für eine Ventilklappe (1) als Druckminderer versehen ist, **dadurch gekennzeichnet, daß** die in der Bohrung (11) angeordnete Kanüle (4) dort von der Eingangsbereichsseite des Fluids durch eine Dichtung abgedichtet ist, wobei die Positionsfestlegung der Dichtung durch ein Halteteil (9) sichergestellt ist, daß die Kanüle in Gegendruckrichtung gehalten und durch eine winkelige Orientierung zur Längsachse der Durchgangsbohrung (11) mittels eines Sperrelementes (45) positioniert wird, welches in einer Vertiefung des Gehäuses an der Ausgangsbereichsseite für das Fluid aufgenommen ist.

2. Fluiddruckminderer nach Anspruch 1, **dadurch gekennzeichnet, daß** die Kanüle (4) auf der Eingangsbereichsseite (13) für das Fluid eine Schulter (48) aufweist, in der ein Dichtungsring aufgenommen ist.

3. Fluiddruckminderer nach Anspruch 1, **dadurch gekennzeichnet, daß** das Sperrelement ein gefalzter Ring in der Durchgangsbohrung (11) ist und in Kontakt mit der Dichtung (8) steht, wobei er diese verformt.

4. Fluiddruckminderer nach Anspruch 1, **dadurch gekennzeichnet, daß** das Sperrelement ein einstückig mit der Kanüle (4) geformter Haken ist.

5. Fluiddruckminderer nach Anspruch 1, **dadurch gekennzeichnet, daß** das Sperrelement (45) ein Haken ist, der aus einem mit der Kanüle (4) fest verbundenen Teil besteht.

6. Fluiddruckminderer nach Anspruch 1, **dadurch gekennzeichnet, daß** die Kanüle (4) einen Kragen (46) aufweist, der gegen eine Schulter (16) der Durchgangsbohrung (11) zur Anlage kommt.

## Claims

1. Fluid-pressure reducer with cannula and calliper of the type comprising a body (1) including a through bore (11), having a fluid inlet zone (13) and a fluid outlet zone (14), and in which the cannula (4) extends, and which is provided with a seat (44) for a valve (1), a pressure reducer characterised in that the cannula (4), fixed in the bore (11), is sealed therein on the same side as the fluid inlet zone (13) by a joint (8), being held in position by a locking member (9), and is held there under back-pressure and positioned in an angular orientation about the longitudinal axis of the through bore (11) by a snapping-in member (45) housed in a cavity in the body, on the same side as the fluid outlet zone of the latter.

2. Fluid-pressure reducer according to Claim 1, characterised in that the cannula (4) has, on the same side as the fluid inlet zone (13), a shoulder (48) in which the sealing joint (8) is housed.

3. Fluid-pressure reducer according to Claim 1, characterised in that the locking member (9) is a washer clamped in the through bore (11) and in contact with the joint (8) so as to deform it.

4. Fluid-pressure reducer according to Claim 1, characterised in that the snapping-in member (45) is a lug made in one piece with the cannula (4).

5. Fluid-pressure reducer according to Claim 1, characterised in that the snapping-in member (45) is a lug produced in one piece integral with the cannula (4).

6. Pressure reducer according to Claim 1, characterised in that the cannula (4) has a collar (46) in abutment against a shoulder (16) of the through bore (11).
